# EUROPÄISCHE PATENTANMELDUNG

(11) **EP 1 263 249 A1**
(43) Veröffentlichungstag der Anmeldung: **04.12.2002**
(21) Anmeldenummer: 01113177.8
(22) Anmeldetag: 30.05.2001
(51) Int. Cl.: H04Q 7/34

(54) **Verfahren und Station zum Fehlermanagement für Software-gestützte Funkstationen mittels Analyse von Funkprotokollen**

(71) Anmelder: SIEMENS AKTIENGESELLSCHAFT, 80333 München (DE)
(72) Erfinder: Becher, Reinhard, Dr., 81245 München (DE); Dillinger, Markus, 81737 München (DE)

(57) **Zusammenfassung**

Die Erfindung bezieht sich auf ein Verfahren zum Fehlermanagement einer softwaregestützten Station (DT) in einem Kommunikationsnetz (UMTS; HiperLAN/2), bei dem zumindest ein Teil der Software der Station (WT) über eine Schnittstelle (V) aktualisiert wird und eine Fehlerüberwachung der Station (WT) hinsichtlich der Aktualisierung durchgeführt wird.
Zur Verbesserung der Fehlerüberwachung wird vorgeschlagen, fehlererkennungsrelevante Daten der Station (WT) für eine zeitversetzte Auswertung in der Station (WT) oder einer Netzeinrichtung (C) zur protokollieren.

Vorteilhafterweise können Sendeleistungswerte protokolliert werden, um diese zu einem späteren Zeitpunkt nach einer Übertragung zu einer Analyseeinrichtung (C) im Kommunikationsnetz mit entsprechenden Netzprotokollanweisungen zu vergleichen, die maximale oder zu ändernde Sendeleistungswerte für die Station (WT) vorgeben.

## Beschreibung

Verfahren und Station zum Fehlermanagement für Software-gestützte Funkstationen mittels Analyse von Funkprotokollen

Die Erfindung bezieht sich auf ein Verfahren zum Fehlermanagement für Software-gestützte Funkstationen mit den oberbegrifflichen Merkmalen des Patentanspruchs 1 sowie eine Station zum Durchführen eines solchen Verfahrens.

In Funk-Kommunikationssystemen werden Informationen mit Hilfe von elektromagnetischen Wellen über eine Funkschnittstelle zwischen sendender und empfangender Station übertragen. Derartige Kommunikationssysteme sind beispielsweise Mobilfunksysteme mit CDMA- oder TD/CDMA-Übertragungsverfahren (TD/CDMA: Time Division/Code Division Multiple Access) über die Funkschnittstelle, wie zum Beispiel beim UMTS (Universal Mobile Telecommunication System), oder funkgestützte Datennetze, zum Beispiel gemäß dem HiperLAN-Standard. Teilnehmerstationen sind entsprechend mobile oder stationäre Funkstationen bzw. funkgestützte Rechner oder Hosts, die nachfolgend einfach als Stationen oder Terminals bezeichnet werden.

Hochwertige Stationen sind mit einer Software ausgestattet, die aktualisierbar ist (upgrade/update). Die Aktualisierung erfolgt dabei in der Regel von netzseitigen Stationen aus über die Schnittstelle zur Station. Beim Aktualisieren der Software ist ein wesentlicher Faktor die Sicherheit des weiteren Betriebs der Station. Dies gilt insbesondere bei Übertragungen über ungesicherte Netze. Hinsichtlich der Sicherheit müssen im wesentlichen vier grundlegende Faktoren berücksichtigt werden, nämlich Validation, Verification, Integrität und Fehlertoleranz. Validation ist im Bereich der Aktualisierung die Fähigkeit, nachzuprüfen, dass der Aktualisierungssender ein gültiger bzw. zugelassener Sender ist und der Aktualisierungsempfänger ein gültiger Empfänger ist. Verification der Aktualisierung bezieht sich auf die Fähigkeit, zu überprüfen, dass das Ziel das Update bzw. die Aktualisierungsdaten erfolgreich empfangen hat. Integrität des Updates bzw. der Aktualisierungsdaten ist die Fähigkeit, sicherzustellen, dass die Inhalte der Aktualisierungsdaten selber nicht geändert wurden. Fehlermanagement bzw. Fehlerbehandlung schließt die Fähigkeit ein, die Software, das System oder was sonst aktualisiert wurde, wieder zu rekonstruieren, falls Fehler während der Übertragung der Aktualisierungsinformationen von dem Server zu dem Ziel oder während der Aktualisierung der entsprechenden Anwendung selber aufgetreten sind. Softwaregestützte Funkstationen benötigen ein Fehlermanagement, wenn die Aktualisierung oder Installation einer neuen Software fehlschlägt. Eine solche Fehlerbehandlung kann als Teil des Gesamtsicherheitskonzepts in aktualisierbaren Stationen angesehen werden. Nachfolgend soll der Bereich der Fehlerbehandlung bzw. des Fehlermanagements betrachtet werden.

Derzeit werden insbesondere zwei Fehlermanagement-Strategien erörtert. Bei dem sogenannten TRUST-Projekt von Motorola liegt der Schwerpunkt auf dem Erfassen und Handhaben fehlerhafter Stationen oder falsch funktionierender Stationen. Dieses Konzept ist entweder Stations- oder Netz-orientiert. Die andere Technologie basiert auf einem Terminal-Agent, der die Inhalte der Nutzlast aufgrund einer Verzeichnisliste kennt und eine erneute Einleitung der Aktualisierung initialisiert, falls eine Verbindung mit dem Server während einer Übertragung verlorengeht, um irgendwelche fehlenden Module abzurufen.

Die Anwendung der Aktualisierungsinformation kann bei der Systemarchitektur fehlertolerant ausgeführt werden. Eine geeignete Architektur verwendet redundante, nicht-flüchtige Speicher, einen zum Halten des alten Systems, das fehlerfrei funktioniert, und einen anderen zum Halten des aktualisierten Systems. Das System bzw. eine entsprechende Software kann bei der Aktualisierung stets zu der funktionierenden alten Konfiguration zurückgeschaltet werden, falls es irgendwelche Probleme beim Aktualisieren des Systems oder der Software gibt.

Derzeitige Lösungen zum Fehlermanagement sind stationsorientiert, das heißt der Klient bzw. die Station hat ein Fehlermanagementsystem, das auf seiner eigenen Validation, Verifikation und Integritätsprüfungen beruht, dabei aber den Aktualisierungsserver bzw. das Netz nicht einbezieht.

Beim TRUST-Projekt sind die Lösungsansätze entweder Stationsoder Netz-orientiert, d.h. das Erfassen einer Fehlfunktion und die Handhabung einer fehlerhaften Station werden in der Station und/oder in dem Netz durchgeführt. Die Entscheidung, ob eine fehlerhafte oder fehlerhaft funktionierende Station vorliegt, beruht dabei auf Leistungspegel-Messungen in der Station oder in dem Netz, d.h. die Station oder das Netz betrachten Momentanzustände der durch die Station ausgestrahlten Übertragungsleistung.

Der Lösungsansatz beruht dabei auf einem CDMA-System, bei dem die Stabilität des Netzes in hohem Maße von den erzeugten Übertragungsintensitäten abhängt. In anderen Systemen, die nicht auf CDMA-Technologien beruhen, wie beispielsweise beim HiperLAN/2-System, ist dieser Faktor nicht derart wesentlich.

Weiterhin ist es bekannt, dass die Stabilität von Computernetzen von dem korrekten Verhalten der Protokolleinheiten in den verschiedenen Schichten, (layers) des OSI-Models (OSI: Open System Interconnection) abhängt.

Die Aufgabe der Erfindung besteht darin, ein verbessertes Verfahren zur Fehlerhandhabung für softwaregestützte Stationen in einem Kommunikationssystem bzw. eine Station zum Durchführen eines solchen Verfahrens vorzuschlagen.

Dieses Aufgabe wird durch ein Verfahren zur Fehlerhandhabung von softwaregestützten Stationen mit den Merkmalen des Patentanspruchs 1 bzw. eine Station zum Durchführen eines solchen Verfahrens nach Anspruch 9 bzw. eine Netzeinrichtung zum Durchführen eines solchen Verfahrens nach Anspruch 10 gelöst.

Bei dem Verfahren zum Fehlermanagement einer softwaregestützten Station in einem Kommunikationsnetz, bei dem zumindest ein Teil der Software der Station über eine Schnittstelle zu einer Netzstation aktualisiert wird und eine Fehlerüberwachung der Station hinsichtlich der Aktualisierung durchgeführt wird, ist es besonders vorteilhaft, wenn zur Fehlerüberwachung, fehlererkennungsrelevante Daten beim Betrieb der Station für eine zeitversetzte Auswertung in der Station oder einer Netzeinrichtung protokolliert werden, da mit einer solchen Protokollierung insbesondere ein Vergleich von stationsseitigen und netzseitigen Daten ermöglicht wird. Vorteilhafterweise werden dabei nicht nur Einzelereignisse vergleichbar, sondern auch eine Folge von fehlererkennungsrelevanten Daten kann abgeglichen werden.

Möglich ist auch die Übertragung eines einzelnen Messwertes zum Abgleich. Das in der Station aufgezeichnete Protokoll kann entsprechend auch Messwerte beinhalten, die dann entsprechend aufgenommen werden.

Vorteilhafte Ausgestaltungen sind Gegenstand von abhängigen Ansprüchen.

Besonders vorteilhaft ist die Ausführungsform, bei der die protokollierten fehlererkennungsrelevanten Daten bei der Station registriert und zur Auswertung über die Netzstation an eine entsprechende Netzeinrichtung übertragen werden. Dies ermöglicht eine Protokollierung von fehlererkennungsrelevanten Daten in der Station und eine spätere Übertragung einer Vielzahl zusammengehörender oder zusammenhängender Daten an eine Netzeinrichtung, die ausreichend Kapazität für eine auch aufwendigere Auswertung bietet.

Die Netzeinrichtung kann dabei vorteilhafterweise die übertragenen, protokollierten Daten zur Auswertung mit netzseitig registrierten Daten vergleichen. Als fehlererkennungsrelevante Daten können beispielsweise Sendeleistungswerte der Station protokolliert werden. Weiterhin können auch funkprotokollbezogene Daten als fehlererkennungsrelevante Daten registriert werden. Auch netzseitige Messdaten von empfangenen Sendeleistungen können erfasst werden. Dies ermöglicht einen Abgleich verschiedenartigster Daten, insbesondere den Abgleich von Sendeleistungswerten, die von der Station als solche protokolliert werden, mit funkprotokollbezogenen Daten oder Empfangsleistungsdaten netzseitigen Ursprungs, die in einem direkten Bezug mit Soll-Sendeleistungswerten stehen.

Stellt sich bei einem Abgleich heraus, dass die Sendeleistungswerte nicht mit den netzseitigen Werten korrespondieren, so kann auf einen Fehler der Einstellungen oder Software der sendenden Station geschlossen werden. Vorteilhafterweise wird im Fall eines erkannten Fehlers eine Korrektur der Aktualisierungsdaten vorgenommen und/oder die Station aus dem Kommunikationsnetz entfernt. Vorteilhaft ist auch das vorübergehende Entfernen einer Station aus dem Kommunikationsnetz für den Fall, dass die Auswertung erst verzögert erfolgt, da durch ein solches Vorgehen verhindert werden kann, dass eine nicht auf fehlerfreien Betrieb überprüfte Station nach einem Update den Sendebetrieb aufnimmt.

Bei der Verbindungsaufnahme zwischen Station und Netzstation zu überprüfen, ob beide Seiten das Verfahren zum Fehlermanagement ausführen können und/oder auf welcher Seite entsprechende Kapazitäten oder Einrichtungen für eine Protokollierung vorhanden sind, ermöglicht die Protokollierung gezielt bei einer der entsprechenden Einrichtungen vorzunehmen. Eine doppelte Protokollierung gleicher Daten bei der Station und bei einer Netzeinrichtung kann beispielsweise vermieden werden. Insbesondere kann feststellt werden, ob eine der beiden Seiten möglicherweise überhaupt nicht für das Ausführen eines solchen Verfahrens geeignet ist, um beispielsweise eine Protokollierung stationsseitig zu deaktivieren, wenn netzseitig keine Auswertung eines solchen Protokolls möglich ist. Auch dadurch können Kapazitäten eingespart werden.

Das vorstehend beschriebene Verfahren bietet somit insbesondere einen Lösungsansatz, bei dem vorteilhafterweise die Aufzeichnung von Ereignissen bei Funkprotokoll-Nachrichten in der Station oder einem Terminal und das Analysieren dieser Daten in dem Netz ermöglicht wird, wobei die Protokolldaten zusammen mit aufgezeichneten Übertragungs-Leistungspegeln der Station verarbeitet werden können.

Ein Ausführungsbeispiel wird nachfolgend anhand der Zeichnung näher erläutert. Es zeigen:
- Fig. 1: schematisch ein Kommunikationssystem mit einer mobilen Station, die mit netzseitigen Einrichtungen kommuniziert, und
- Fig. 2: schematisch einen Prozessablauf des angewandten Verfahrens.

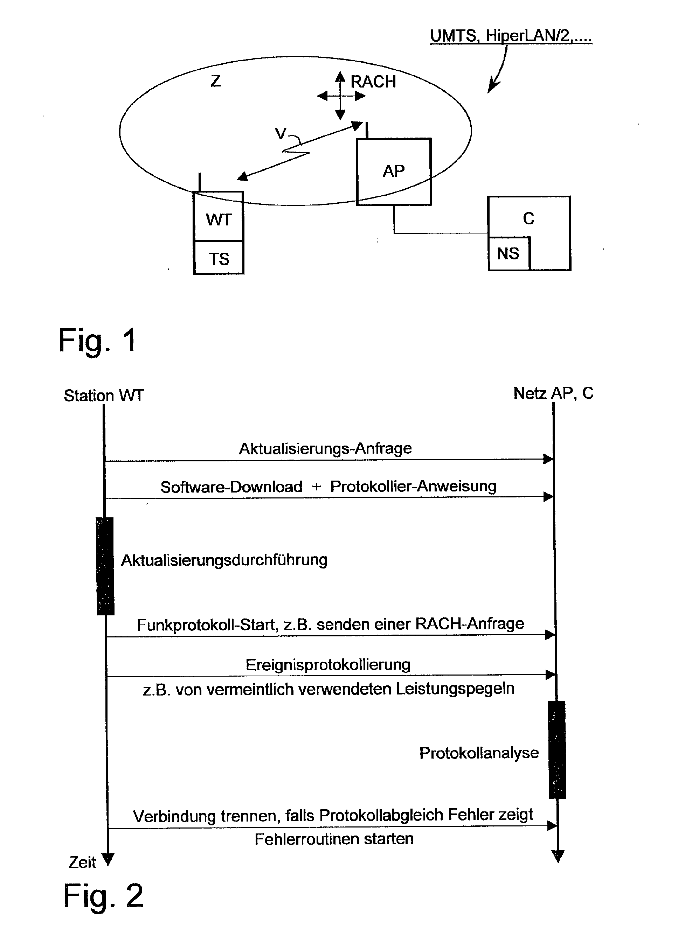

Wie aus Fig. 1 ersichtlich, besteht ein beispielhaftes Kommunikationsnetz aus einer Vielzahl von Netzeinrichtungen, wobei das Kommunikationsnetz beispielsweise ein Mobilfunknetz gemäß UMTS (Universal Mobile Telekommunikation System) oder GSM (Global System for mobile Kommunikation) oder auch ein Datennetz gemäß zum Beispiel HiterLAN/2 sein kann. Solche Netze weisen neben einer Vielzahl von Steuereinrichtungen C Zugriffspunkte AP auf, die als netzseitige Funkzugriffsstationen, Netzstationen, Basisstationen oder Zugriffspunkte AP bezeichnet werden. Um die Zugriffspunkte AP werden eine oder mehrere Funkzellen Z aufgebaut, innerhalb derer eine Verbindung V zwischen dem Zugriffspunkt AP und einer stationären oder mobilen Funkstation WT aufgebaut werden kann. Funkstationen WT sind insbesondere Mobiltelefone, drahtlos an ein Netz angekoppelte Terminals WT und Computer oder dergleichen.

Zweckmäßigerweise weisen die Stationen WT jeweils zumindest einen Speicher TS auf, in dem für den Betrieb der Station WT erforderliche Programme und Daten hinterlegt sind. In diesem oder weiteren Speichern TS können auch Anwender- oder Anwendungs-spezifische Daten abgespeichert werden.

Entsprechend sind auch Netzeinrichtungen, hier die Steuereinrichtung C, mit netzseitigen Speichereinrichtungen NS ausgestattet, die zum Abspeichern von betriebsrelevanten Programmen, anwendungsbezogenen Programmen, teilnehmerbezogenen Daten und dergleichen verwendet werden.

Bei dem beispielhaften Verfahren zum Durchführen eines Fehlermanagements einer softwaregestützten Station WT in dem Kommunikationsnetz wird eine Fehlerüberwachung der Station WT hinsichtlich der Aktualisierung der Software der Station WT vorgenommen. Bei der bevorzugten Ausführungsform wird bei der Fehlerüberwachung eine Auswertung fehlererkennungsrelevanter Daten vorgenommen. Als fehlererkennungsrelevante Daten werden insbesondere Funkprotokoll-Nachrichten oder Funkprotokoll-Informationen und diesen zugeordnete Leistungspegel, deren Werte stationsseitig oder netzseitig bestimmt werden, miteinander kombiniert.

Für den Fall, dass es sich bei der Station WT um ein HiperLAN/2 Terminal handelt, greift dieses bei der Verbindungsaufnahme auf einen Direktzugriffskanal für zufällige Zugriffe RACH (Random Access Channel) zu. Die für den Zugriff der Station WT zulässige Übertragungsleistung bzw. Sendeleistung wird durch die maximal zulässige Sendeleistung festgelegt, die durch den Zugriffspunkt bzw. die Netzstation AP über einen Nachrichtenkanal allgemein mitgeteilt wird.

Eine fehlerhafte oder nach einer Softwareaktualisierung fehlerhaft funktionierende Station WT könnte mit einer höheren Leistung senden, was zu einer Störung des gesamten Betriebs im Kommunikationsnetz führen kann.

Um dies zu vermeiden, wird das Verfahren zum Fehlermanagement angewendet. Dabei werden stationsseitige, fehlererkennungsrelevante Daten erfasst und aufgezeichnet. Diese protokollartig aufgezeichneten Daten werden zusammen mit den von der Netzstation AP mitgeteilten maximal zulässigen Übertragungswerten an eine Analyseeinrichtung übermittelt. Die Analyseeinrichtung befindet sich dabei vorteilhafterweise als eine der Steuereinrichtungen oder Bestandteil einer solchen Steuereinrichtung C in einer netzseitigen Vorrichtung. Die Analyseeinrichtung vergleicht die Sendeleistungswerte der Station WT mit den seitens der Netzstation mitgeteilten zulässigen Übertragungs- bzw. Sendeleistungswerten.

Für den Fall zu hoher tatsächlicher Sendeleistungen der Station WT wird ein Fehler erkannt und eine entsprechende Fehlerbehandlung bzw. Korrekturmaßnahmen oder Fehlerbeseitigungsmaßnahmen können eingeleitet werden. Im Falle eines feststellten Fehlers kann beispielsweise eine Trennung der Station WT von den Netzverbindungen V veranlaßt werden, um weitere Zugriffe der Station WT auf das Kommunikationsnetz zu verhindern. Dies kann als dauerhafte Maßnahme oder als zeitlich begrenzte Maßnahme durchgeführt werden. Vorteilhafterweise können für den Fall, dass ein Fehler infolge einer Softwareaktualisierung seitens der Station WT aufgetreten ist, eine erneute Softwareaktualisierung oder eine Reaktivierung der ursprünglich installierten Software, die sich vorteilhafterweise in einem Speicherbereich des Speichers TS der Station WT befindet, vorgenommen werden.

Bei der Erfassung und/oder Protokollierung fehlererkennungsrelevanter Daten, die sowohl bei der Station WT als auch bei einer netzseitigen Einrichtung C erfolgen kann, können verschiedenartigste Messgrößen, Parameter oder Protokolldaten aufgezeichnet werden. Um einen sicheren Abgleich zu ermöglichen, können zusätzlich zu Messparametern auch Funkblocknummern (radio numbers) oder andere messbare Größen aufgezeichnet werden, die eine Zuordnung der stationsseitig erfassten Daten zu netzseitigen Daten ermöglichen. Zweckmäßigerweise handelt es sich bei den Daten und Parametern um Größen, die bei einem Verbindungsaufbau oder im Rahmen eines Datenaustausches für eine Softwareaktualisierung üblicherweise übertragen werden.

Als Befehl zum Beginn einer Protokollaufzeichnung kann beispielsweise einfach festgelegt werden, dass nur die Nachrichten und Sendesignale mit Bezug auf den Direktzugriffskanal RACH aufgezeichnet werden sollen, wobei insbesondere auch nur die Sendeleistung in Aufwärtsrichtung, d.h. von der Station WT in Richtung der Netzstation AP, für die Analyse im Netz von Interesse ist.

Natürlich könnte ein vergleichbares Verfahren auch umgekehrt angewendet werden, wenn Registrierungen einer Sendeleistung in Abwärtsrichtung von der Netzstation AP zur Station WT aufgezeichnet werden, um eine Softwareaktualisierung bei der Netzstation AP zu überprüfen. Die Netzstation wäre dann als Station im vorstehenden Sinne anzusehen.

Ein beispielhafter Verfahrensablauf ist anhand Fig. 2 dargestellt. In einem ersten Verfahrensschritt sendet die Station WT in Richtung der Netzstation AP eine Anforderung zu Rekonstruierung oder zur Übermittlung von Aktualisierungsinformationen für die Software der Station WT.

Es folgen ein Herunterladen von Software und zweckmäßigerweise einem Befehl zur Protokollierung oder Ablaufverfolgung der nachfolgenden Sendevorgänge der Station WT.

Nach seinem Rekonstruierungs- oder Aktualisierungsprozess wird ein Verbindungsaufbau von der Station WT zu der Netzstation AP eingeleitet, wobei der Verbindungsaufbau gemäß dem entsprechenden Funkprotokoll des FunkKommunikationssystems durchgeführt und protokolliert wird. Im vorliegenden Fall wird beispielsweise zu Beginn des Verbindungsaufbaus eine Anforderung über den Direktzugriffskanal RACH zur Netzstation AP gesendet.

Nach einer Abfolge von Sendevorgängen, zu einem definierten Zeitpunkt oder in Verbindung mit einer entsprechenden Identifizierungsinformation wird das Protokoll mit den fehlererkennungsrelevanten Daten von der Station WT zur Netzstation AP übertragen. Dieses Protokoll umfaßt die fehlererkennungsrelevanten Daten, die während der letzten Sendevorgänge der Station WT aufgezeichnet wurden, insbesondere die beim Senden verwendeten Leistungspegel.

Nach einer netzseitigen Analyse des Protokolls wird entweder ein Verbindungsaufbau zwischen der Station WT und der Netzstation AP bestätigt, so dass zwischen der Station WT und der Netzstation AP eine Kommunikationsverbindung aufgebaut oder bestätigt werden kann, oder Fehlerroutinen werden aktiviert, falls ein stationsseitiger Fehler erkannt wurde. Insbesondere kann ein Trennen der Verbindung V zwischen Station WT und der Netzstation AP veranlaßt werden, was insbesondere mit einer Freigabe des entsprechenden Kanals für andere Verbindungen verbunden ist.

Das Lösen einer Verbindung V kann alternativ auch vor dem Durchführen der Protokollanalyse veranlaßt werden, falls für die Protokollanalyse eine zu lange Zeit beansprucht wird, um einen sicheren Netzbetrieb für den Fall einer fehlerhaften oder fehlerhaft funktionierenden Station WT gewährleisten zu können.

Während die Stationen WT vorzugsweise alle mit den entsprechenden Einrichtungen und Funktionen zum Durchführen eines solchen Verfahrens zum Fehlermanagement ausgestattet sein sollten, sollten die Netzstationen AP entweder entsprechende Einrichtungen und Funktionen aufweisen oder zumindest in der Lage sein, entsprechende Protokolle von den Stationen BT zu entsprechenden Netzeinrichtungen, wie der Steuereinrichtung C, mit einer integrierten Analyseeinrichtung weiterleiten zu können.

Prinzipiell sind die Erfassung und Speicherung von Fehlererkennungsrelevanten Daten sowohl in den Stationen WT als auch in netzseitigen Einrichtungen möglich, wie auch die Durchführung einer Analyse der entsprechenden Daten in der Station WT durchgeführt werden könnte, sofern die dafür erforderlichen Abgleichdaten von der Netzstation AP zur Station BT übermittelt werden. Mit Blick auf die größeren zur Verfügung stehenden Kapazitäten in den netzseitigen Einrichtungen erscheint jedoch eine Lösung am effektivsten, bei der in der Station WT lediglich eine Protokollerstellung erfolgt, während zu netzseitigen Einrichtungen übertragene Protokolle netzseitig analysiert und ausgewertet werden.

## Patentansprüche

1. Verfahren zum Fehlermanagement einer softwaregestützten Station (WT) in einem Kommunikationsnetz (UMTS; HiperLAN/2), bei dem
- zumindest ein Teil der Software der Station (WT) aktualisiert wird (Update/Upgrade) und
- eine Fehlerüberwachung der Station (WT) hinsichtlich der Aktualisierung durchgeführt wird,
**dadurch gekennzeichnet,**
- **dass** zur Fehlerüberwachung fehlererkennungsrelevante Daten der Station (WT) für eine zeitversetzte Auswertung in der Station (WT) oder einer Netzeinrichtung (C) protokolliert werden.

2. Verfahren nach Anspruch 1, bei dem
die protokollierten, fehlererkennungsrelevanten Daten zur Auswertung über die Netzstation (AP) an eine Analyse-Netzeinrichtung (C) übertragen werden.

3. Verfahren nach Anspruch 1 oder 2, bei dem
die Analyse-Netzeinrichtung (C) die protokollierten Daten zur Auswertung mit entsprechenden netzseitig registrierten oder vorgegebenen Daten vergleicht.

4. Verfahren nach einem der vorstehenden Ansprüche, bei dem als fehlererkennungsrelevante Daten Sendeleistungswerte der Station (WT) protokolliert werden.

5. Verfahren nach einem der vorstehenden Ansprüche, bei dem die fehlererkennungsrelevanten Daten und/oder netzseitige Vergleichsdaten Funkprotokoll-bezogene Daten sind.

6. Verfahren nach einem der vorstehenden Ansprüche, bei dem im Fall eines erkannten Fehlers eine Korrektur der Aktualisierung vorgenommen und/oder die Station (WT) aus dem Kommunikationsnetz entfernt wird.

7. Verfahren nach einem der vorstehenden Ansprüche, bei dem im Fall einer verzögerten Auswertung die Station (WT) zumindest vorübergehend aus dem Kommunikationsnetz entfernt wird.

8. Verfahren nach einem der vorstehenden Ansprüche, bei dem bei der Verbindungsaufnahme zwischen der Station (WT) und der Netzstation (AP) überprüft wird, ob beide Seiten das Verfahren ausführen können und/oder auf welcher Seite eine Protokollierung durchzuführen ist.

9. Station (WT) zum Durchführen eines Verfahrens nach einem vorstehenden Anspruch.

10. Netzeinrichtung (C) zum Durchführen eines Verfahrens nach einem der Ansprüche 1 bis 8.
